# EUROPEAN PATENT APPLICATION

(11) **EP 4 406 987 A1**
(43) Date of publication of application: **31.07.2024**
(21) Application number: 23153691.3
(22) Date of filing: 27.01.2023
(51) Int. Cl.: C08G 18/48, C08G 18/79, C08G 18/76, C08G 18/20, C08G 18/16, C08G 18/09, C08G 18/72, C08J 9/14, H01M 50/00

(54) **CURABLE POTTING MATERIAL FOR AUTOMOTIVE BATTERY PACKS**

(71) Applicant: Sika Technology AG, 6340 Baar (CH)
(72) Inventor: BATTISTI, Andrea, 8050 Zürich (CH); HUBER, Michael, 8001 Zürich (CH); NUETZEL, Rainer, 9057 Weissbad (CH); REIMANN, Sven, 8046 Zürich (CH)
(74) Representative: Sika Patent Attorneys

(57) **Abstract**

The present invention is related to a two-component composition consisting of a first component and a second component; wherein
the first component comprises
- at least one polyol having an average OH functionality of at least 2;
- at least one first catalyst for catalyzing the reaction between hydroxyl groups and isocyanate groups;
- at least one second catalyst for catalyzing the trimerization reaction of isocyanate groups;
- preferably at least one foam stabilizer; and

the second component comprises
- at least one oligomeric or polymeric polyisocyanate;
- preferably at least one blowing agent;

wherein said second catalyst is a trialkylphosphine compound;
and wherein the molar ratio of all NCO groups in the two-component composition to all OH groups in the two-component composition is higher than 1.1, preferably higher than 1.3.

The two-component composition is highly suitable as potting material for the production of structural battery packs using cell-to-body design.

## Description

### Technical field

The invention relates to a two-component composition suitable as potting material for the production of battery packs, the use of the two-component composition as potting material, particularly for the manufacturing of battery packs, in particular battery packs for electric vehicles, a method for producing a battery pack, as well as a battery pack produced with this method.

### Background art

Battery technology in electric vehicles is developing fast, alongside with the significant interest e-mobility has received in the past years. In this regard, the manufacturing of electric vehicle batteries has seen significant progress in terms of economically viable and efficient production processes. Two of the current trends that are relevant for this field of application are cell-to-body designs of battery packs (also called structural battery packs) and the recently increased adoption of battery cells of cylindrical form.

In order to decrease complexity and weight, the industry has moved from cell-module-pack design to cell-to-pack or cell-to-body design. That is, cells are directly bonded to the battery pack, hence avoiding the need of intermediate assemblies of battery modules and all the related inefficiencies in term of number of parts, weight, cost, and complexity.

For example, cell-to-pack designs are implemented by bonding cylindrical battery cells to a cooling plate or cooling ribbon with a thermal interface material. The thermal interface material serves two purposes: First, it provides a mechanical fastening system to keep the cells in place and second, it provides mechanical and thermal protection within the whole battery assembly. The mechanical and adhesive performance of such thermal interface materials is of key importance, and it therefore should have the characteristics of a thermally conductive adhesive. This assembly method using cylindrical battery cells furthermore has a significant amount of free volume, located between the individual cells, which is therefore filled with an injectable or pourable material, mostly with a foam-like cellular structure, in order to reduce weight and to provide shock-absorbing properties. The functions of this foam are to keep the cells in position during their work life, and to thermally insulate cells from each other. The latter is a safety function in case of cell malfunctions: if one cell heats up uncontrollably, as it is a risk connected to current lithium-based battery cells, then the neighboring cells need to be protected from excessive temperatures, or they will experience a thermal degradation and generate additional heat and even ignite, possibly affecting further neighboring cells. This catastrophic event is called thermal runaway.

In order to reduce the overall vehicle weight, the material used for filling the interstitial volume is typically expanded to a foam.

Foams used in traditional cell-to-pack design do not have an important mechanical function and are usually soft to semi-rigid, expanded two-component polyurethane (2C-PU) foams.

During processing or manufacturing of the battery, such foams must however cure with a limited exotherm in order to avoid damage to the cells, but they should also cure fast enough in order not to decrease the productivity of the battery assembly line.

Structural battery packs are an evolution of this concept. In this approach, the foam material is much more stiff and mechanically strong than in traditional cell-to-pack designs just described. The stiffness of the cells in this approach beneficially helps to increase the mechanical and driving dynamics of the vehicle.

The foam material however has still to fulfill the basic functions regarding thermal insulation as described above. Additionally, to provide the structural strength, the material needs to strongly connect all components of a battery pack, such as the cells, and for this purpose needs to have good adhesion to a multitude of materials. Furthermore, the material needs to have high stiffness for the battery pack to contribute to the overall rigidity of the vehicles. High mechanical properties are also important to prevent physical damage to the cells in case of high- speed impacts. It is also important to achieve the desired mechanical properties over the whole temperature range of use, typically from -20°C to 65°C. The glass transition of the material used should be outside of this range and the drop of stiffness with increased temperature needs to be as limited as possible. In case of a thermal event, it is advantageous if the potting material can withstand high temperatures for extended amounts of time with only limited degradation.

The implementation of such structural battery packs is usually achieved with a 2C-PU material having a high concentration of reactive groups, which provides the desired mechanical properties due to high degree of cross-linking, but in turns exacerbates the exothermic reaction during its curing and makes temperature control during processing more challenging.

Furthermore, from the health and safety point of view, the hardener components of such highly functional 2C-PU systems normally exhibit a high content of monomeric isocyanates. To limit exposure of the worker and to satisfy current workplace safety regulations (as implemented by REACH in Europe), the manufacturing building requirements in term of ventilation and safety needs to be suitable to work with such hazardous substances, which implies additional cost and complexity.

US20220209343A1, for example, discloses such a 2C-PU material and method of potting an electric cell, whereby high mechanical stability and flame-retardant properties are obtained. The 2C-PU material contains a liquid flame retardant additive and a blowing agent and in exemplary shown embodiments comprises a curing component based on monomeric and/or polymeric MDI. While the mechanical and flame-retarding properties of the cured material are certainly sufficient for producing structural battery packs, care has to be taken during production that the exothermicity of the curing material does not exceed levels that could damage the electric cells during assembly.

A general problem associated with such structural battery packs based on rigid, highly crosslinked polyurethane materials is the difficulty to easily remove or replace single cells after the material has been applied and partially cured. Once the crosslinking reaction of the 2C-PU material has progressed sufficiently that the battery assembly can be moved within the assembly line, the cells are already firmly embedded therein and cannot be removed or repositioned without significant effort and partial destruction of the potting material.

Furthermore, 2C-PU compositions generally need to be carefully monitored in terms of mixing ratio of the polyol and the hardener component in order to obtain a properly curing material with the desired mechanical and other properties.

Thus, there is still a need for new and improved optionally foaming potting materials suitable for the production of battery packs that overcome the aforementioned disadvantages and provide novel benefits.

### Disclosure of the invention

It is an object of the present invention to provide a potting material highly suitable for the production of structural battery packs using cell-to-body design. In order to achieve high storage stability and fast curing, the material should be provided in a two-component composition that cures, preferably without external heating, when the components are mixed. This material should after curing be rigid and mechanically strong enough to provide the desired stability of the battery packs produced therewith. Furthermore, it should have a better EHS profile than commonly used 2C-PU materials and in particular it should have a low content of monomeric isocyanates. The material should cure with very limited exothermicity to avoid thermal damage to the cells, and curing should happen in two steps, involving an initial gelling of the material to fix the battery cells in place, but still allowing disassembly and reuse of the battery cells in case of defects on the manufacturing line, followed by a slow final curing process, taking place over hours or days, to yield a highly rigid and strong material. Furthermore, it would be desirable to have a material that cures into a highly rigid material even in case of significant deviations of the ideal weight or volume mixing ratio (for example, +/-20% or more). In preferred embodiments, the material should be foamable and have a freely adjustable foaming ratio, e.g., from 0% to 1000% of expansion. Additionally, the cured material should exhibit a glass transition temperature (Tg) outside the thermal range that is relevant for electric vehicle batteries. Lastly, the material should in its cured state have high and long-lasting thermomechanical stability. Lastly, the material should exhibit excellent electrical resistivity in its cured state to be suitable as battery potting material.

Surprisingly, it has been found that all these objects can be achieved with the two-component composition according to independent claim 1.

Specifically, in a first aspect the present invention is related to a two-component composition consisting of a first component **A** and a second component **B**; wherein
- the first component **A** comprises
   - at least one polyol **P** having an average OH functionality of at least 2;
   - at least one catalyst **C1** for catalyzing the reaction between hydroxyl groups and isocyanate groups;
   - at least one catalyst **C2** for catalyzing the trimerization reaction of isocyanate groups;
   - preferably at least one foam stabilizer **F**; and
- the second component **B** comprises
   - at least one oligomeric or polymeric polyisocyanate **I**;
   - preferably at least one blowing agent **E**;
wherein said catalyst **C2** is a trialkylphosphine compound;
and wherein the molar ratio of all NCO groups in the two-component composition to all OH groups in the two-component composition is higher than 1.1, preferably higher than 1.3.

The two-component composition according to claim 1 surprisingly offers distinct advantages compared to compositions of the state of the art used in the production of structural battery packs using cell-to-body design. More specifically, the two-component composition according to claim 1 exhibits an exotherm during curing that is limited to less than 80°C, thus significantly reducing the risk of damages to the battery cells during production of the batter pack. Additionally, curing of the two-component composition according to claim 1 proceeds in two steps: an initial gelling to fix the battery cells in place, but still allowing disassembly and reuse of the battery cells in case of defects on the manufacturing line, followed by a slow curing, over days, to a highly rigid and structurally strong material. Furthermore, compared to 2C-PU compositions, the composition according to claim 1 hardens to a highly rigid material even in case of significant variations of the weight or volume mixing ratio (+/- 20% or more) of the two components. This can be achieved with the unique dual curing mechanism or the composition according to claim 1. In preferred embodiments, the composition according to claim 1 is foamable and exhibits a freely adjustable expansion ratio, from 0% to 1000%, while also in highly expanded states still providing the desired mechanical strength and stiffness. Additionally, the composition according to claim 1 after curing exhibits a Tg outside of the usage range of electric vehicle batteries and shows high thermomechanical stability. Lastly, the composition according to claim 1 exhibits outstanding electrical resistivity in its cured state, which adds to its suitability as potting material for batteries.

Accordingly, in a second aspect the present invention is related to the use of a two-component composition according to the present invention as potting material, particularly for the manufacturing of battery packs, in particular battery packs for electric vehicles, which is the subject-matter of independent claim 10.

In a third aspect the present invention is related to a method for producing a battery pack, by using a two-component composition according to the present invention as potting material, which is the subject-matter of independent claim 12.

In a fourth aspect the present invention is related to a battery pack produced by the method according to the present invention, which is the subject-matter of independent claim 15.

Particularly preferred embodiments are outlined throughout the description and the dependent claims.

### Ways of carrying out the invention

A first aspect of the present invention is directed to a two-component composition consisting of a first component **A** and a second component **B**; wherein
- the first component **A** comprises
   - at least one polyol **P** having an average OH functionality of at least 2;
   - at least one catalyst **C1** for catalyzing the reaction between hydroxyl groups and isocyanate groups;
   - at least one catalyst **C2** for catalyzing the trimerization reaction of isocyanate groups;
   - preferably at least one foam stabilizer **F**; and
- the second component **B** comprises
   - at least one oligomeric or polymeric polyisocyanate **I**;
   - preferably at least one blowing agent **E;**

wherein said catalyst **C2** is a trialkylphosphine compound;
and wherein the molar ratio of all NCO groups in the two-component composition to all OH groups in the two-component composition is higher than 1.1, preferably higher than 1.3.

The prefix "poly" in substance names such as "polyol", "polyisocyanate", "polyether" or "polyamine" in the present document indicates that the respective substance formally contains more than one of the functional group that occurs in its name per molecule.

In the present document the term "polymer" firstly encompasses a collective of macromolecules that are chemically uniform but differ in the degree of polymerization, molar mass, and chain length, said collective having been produced by a "poly" reaction (polymerization, polyaddition, polycondensation). The term secondly also encompasses derivatives of such a collective of macromolecules from "poly" reactions, i.e., compounds that have been obtained by reactions, for example additions or substitutions, of functional groups on defined macromolecules and that may be chemically uniform or chemically nonuniform. The term further encompasses so-called prepolymers too, i.e., reactive oligomeric initial adducts, the functional groups of which are involved in the formation of macromolecules.

The term "polyurethane polymer" encompasses all polymers produced according to the so-called diisocyanate polyaddition process. This also includes polymers that are virtually or completely free of urethane groups. Examples of polyurethane polymers are polyether polyurethanes, polyester polyurethanes, polyether polyureas, polyureas, polyester polyureas, polyisocyanurates, and polycarbodiimides.

In the present document, "molecular weight" is understood to mean the molar mass (in grams per mole) of a molecule or a molecule residue. "Average molecular weight" refers to the number average Mₙ of a polydisperse mixture of oligomeric or polymeric molecules or molecule residues, which is typically determined by gel-permeation chromatography (GPC) against polystyrene as standard.

In the present document, "room temperature" refers to a temperature of 23°C. Percent by weight values, abbreviated to % by weight, refer to the proportions by mass of a constituent in a composition based on the overall composition, unless otherwise stated. The terms "mass" and "weight" are used synonymously in the present document.

A "primary hydroxyl group" refers to an OH group attached to a carbon atom having two hydrogens.

In this document, the "pot life" refers to the time within which, after mixing the two components, the polyurethane composition can be processed before the viscosity resulting from the progression of the crosslinking reaction has become too high for further processing.

The term "strength" in the present document refers to the strength of the cured composition, with strength meaning in particular the tensile strength and modulus of elasticity, particularly within the 0.05% to 0.25% region of elongation, and/or the compressive strength and compressive modulus.

All industry standards and norms mentioned in this document relate to the versions valid at the date of first filing.

A composition is referred to as "storage-stable" or "storable" when it can be stored at room temperature in a suitable container over a prolonged period, typically over at least 3 months up to 12 months or more, without this storage resulting in any change in its application or use properties to an extent relevant to its use.

The "open time" or "processing time" refers to the period of time in which the composition can be worked or reworked after the curing process has commenced. "Room temperature" refers to a temperature of 23°C.

The first and second components of the composition are intrinsically storage-stable and are stored in separate containers until they are mixed with one another shortly before or during application.

A two-component composition according to the invention consists of a first component **A** and a second component **B**.

### First component A

The first component **A** of the two-component composition according to the invention comprises
- at least one polyol **P** having an average OH functionality of at least 2;
- at least one catalyst **C1** for catalyzing the reaction between hydroxyl groups and isocyanate groups;
- at least one catalyst **C2** for catalyzing the trimerization reaction of isocyanate groups;
- preferably at least one foam stabilizer **F**.

### Polyol P

The first component **A** of the two-component composition according to the invention comprises at least one polyol **P** having an average OH functionality of at least 2.

Especially suitable polyols **P** are those that are liquid at room temperature.

Preference is given to polyols **P** having an average molecular weight Mₙ in the range from 200 to 20'000 g/mol, preferably 250 to 10'000 g/mol, especially 300 to 5'000 g/mol. If more than one type of polyol is used as polyol **P**, then the average molecular weight Mₙ of polyol **P** refers to the average molecular weight Mₙ of all polyols comprised in polyol **P**.

Preference is given to polyols **P** having an average OH functionality in the range from 2 to 4, more preferably from 2.5 to 3. If more than one type of polyol is used as polyol **P**, then the average OH functionality of polyol **P** refers to the average OH functionality of all polyols comprised in polyol **P**.

Particular preference is given to polyols **P** having an average molecular weight Mₙ in the range from 250 to 10'000 g/mol, in particular 300 to 5'000 g/mol and an average OH functionality in the range from 2 to 4, in particular 2.5 to 3.

Suitable polyols **P** as a constituent of the first component **A** are especially the following commercially available polyols or mixtures thereof:
- polyether polyols, especially polyoxyalkylenediols and/or polyoxyalkylenetriols, especially polymerization products of ethylene oxide, 1,2-propylene oxide, 1,2- or 2,3-butylene oxide, oxetane, tetrahydrofuran or mixtures thereof, where these are polymerized with the aid of a starter molecule having two or more active hydrogen atoms, especially a starter molecule such as water, ammonia or a compound having multiple OH or NH groups, for example ethane-1,2-diol, propane-1,2- or -1,3-diol, neopentyl glycol, diethylene glycol, triethylene glycol, the isomeric dipropylene glycols or tripropylene glycols, the isomeric butanediols, pentanediols, hexanediols, heptanediols, octanediols, nonanediols, decanediols, undecanediols, cyclohexane-1,3- or -1,4-dimethanol, bisphenol A, hydrogenated bisphenol A, 1,1,1-trimethylolethane, 1,1,1-trimethylolpropane, glycerol, aniline, ethylenediamine or mixtures of the aforementioned compounds. Likewise suitable are polyether polyols with polymer particles dispersed therein, especially those with styrene/acrylonitrile (SAN) particles or polyurea or polyhydrazodicarbonamide (PHD) particles.
   Preferred polyether polyols are polyoxypropylenediols, polyoxypropylenetriols or ethylene oxide-terminated (EO-endcapped) polyoxypropylenediols or -triols. The latter are mixed polyoxyethylene/polyoxypropylene polyols (block copolymers) which are especially obtained by further alkoxylating polyoxypropylene diols or triols with ethylene oxide on conclusion of the polypropoxylation reaction, and ultimately mainly have primary hydroxyl groups as a result.
   Preferred polyether polyols have a degree of unsaturation of less than 0.02 meq/g, especially less than 0.01 meq/g.
- Polyester polyols, also called oligoesterols, prepared by known processes, especially the polycondensation of hydroxycarboxylic acids or lactones or the polycondensation of aliphatic and/or aromatic polycarboxylic acids with di- or polyhydric alcohols. Preference is given to polyester diols from the reaction of dihydric alcohols such as, in particular, ethane-1,2-diol, diethylene glycol, propane-1,2-diol, dipropylene glycol, butane-1,4-diol, pentane-1,5-diol, 3-methylpentane-1 ,5-diol, hexane-1,6-diol, neopentyl glycol, or trihydric alcohols such as glycerol, 1,1,1-trimethylolpropane or mixtures of the aforementioned alcohols, with organic dicarboxylic acids or the anhydrides or esters thereof, such as, in particular, succinic acid, glutaric acid, adipic acid, suberic acid, sebacic acid, dodecanedicarboxylic acid, maleic acid, fumaric acid, phthalic acid, isophthalic acid, terephthalic acid or hexahydrophthalic acid or mixtures of the aforementioned acids, or polyester polyols formed from lactones such as, in particular, ε-caprolactone. Particular preference is given to polyester polyols formed from adipic acid or sebacic acid or dodecanedicarboxylic acid and hexanediol or neopentyl glycol.
   Particularly suitable polyester polyols are polyester diols.
- Polycarbonate polyols as obtainable by reaction, for example, of the abovementioned alcohols - used to form the polyester polyols - with dialkyl carbonates, diaryl carbonates or phosgene.
- Block copolymers bearing at least two hydroxyl groups and having at least two different blocks having polyether, polyester and/or polycarbonate structure of the type described above, especially polyether polyester polyols.
- Polyacrylate polyols and polymethacrylate polyols.
- Polyhydroxy-functional fats and oils, also called fatty acid polyols, especially natural fats and oils optionally modified with ketone resins, especially castor oil or reaction products of castor oil with ketone resins; or polyols obtained by chemical modification of natural fats and oils - called oleochemical polyols - for example the polyols obtained by epoxidation of unsaturated oils and subsequent ring opening with carboxylic acids or alcohols, or polyols obtained by hydroformylation and hydrogenation of unsaturated oils; or polyols obtained from natural fats and oils by degradation processes, such as alcoholysis or ozonolysis, and subsequent chemical linkage, for example by transesterification or dimerization, of the degradation products or derivatives thereof thus obtained. Suitable degradation products of natural fats and oils are in particular fatty acids and fatty alcohols and also fatty acid esters, in particular the methyl esters (FAME), which can be derivatized to hydroxy fatty acid esters, for example by hydroformylation and hydrogenation.
- Polyhydrocarbon polyols, also called oligohydrocarbonols, such as, for example, polyhydroxy-functional polyolefins, polyisobutylenes, polyisoprenes; polyhydroxy-functional ethylene/propylene, ethylene/butylene or ethylene/propylene/diene copolymers, as produced, for example, by Kraton Polymers; polyhydroxy-functional polymers of dienes, especially of 1,3-butadiene, which can especially also be prepared from anionic polymerization; polyhydroxy-functional copolymers of dienes, such as 1,3-butadiene, or diene mixtures and vinyl monomers, such as styrene, acrylonitrile, vinyl chloride, vinyl acetate, vinyl alcohol, isobutylene and isoprene, for example polyhydroxy-functional acrylonitrile/butadiene copolymers, as can be prepared, for example, from epoxides or aminoalcohols and carboxyl-terminated acrylonitrile/butadiene copolymers (commercially available, for example, under the Hypro^{®} CTBN or CTBNX or ETBN name from Emerald Performance Materials); and hydrogenated polyhydroxy-functional polymers or copolymers of dienes.

Particularly suitable polyols **P** are polyester polyols and polyether polyols, in particular polyoxyethylene polyols, polyoxypropylene polyols, and polyoxypropylene polyoxyethylene polyols, preferably polyoxyethylene diols, polyoxypropylene diols, polyoxyethylene triols, polyoxypropylene triols, polyoxypropylene polyoxyethylene diols, and polyoxypropylene polyoxyethylene triols.

In one preferred embodiment, polyol **P** consists of a mixture of diols and triol, in particular polyether diols and triols, preferably selected from the polyether diols and triols just described above.

In another preferred embodiment, polyol **P** consists of at least one triol, in particular at least one polyether triol preferably selected from the polyether triols just described above.

The first component **A** of the two-component composition preferably comprises between 50 wt.-% and 99 wt.-%, in particular between 75 wt.-% and 97 wt.-%, most preferably between 85 wt.-% and 95 wt.-%, based on component **A**, of polyol **P**.

### Catalyst C1

The first component **A** of the two-component composition according to the invention comprises at least one catalyst **C1** for catalyzing the reaction between hydroxyl groups and isocyanate groups.

Suitable as catalyst **C1** are all known catalysts that accelerate the reaction of the isocyanate groups with hydroxyl groups of polyol **P**, especially compounds of tin, iron, bismuth, zinc, manganese, chromium, cobalt, copper, nickel, molybdenum, lead, cadmium, mercury, antimony, vanadium, titanium, aluminum, potassium or rare earth metals, especially organotin(IV) compounds such as dibutyltin diacetate, dibutyltin dilaurate, dimethyltin dilaurate, dibutyltin dichloride, dibutyltin diacetylacetonate or dioctyltin dilaurate, bismuth(III) complexes, zinc(II) acetate, zinc(II) 2-ethylhexanoate, zinc(II) laurate, zinc(ll) acetylacetonate, cobalt(II) 2-ethylhexanoate, copper(II) 2-ethylhexanoate, nickel(II) naphthenate, aluminum lactate, aluminum oleate, diisopropoxytitanium bis(ethylacetoacetate); compounds containing tertiary amino groups, especially N-ethyldiisopropylamine, N,N,N',N'-tetramethylalkylenediamines, pentamethylalkylenetriamines and higher homologs thereof, bis-(N,N-diethylaminoethyl) adipate, tris(3-dimethylaminopropyl)amine, 1,4-diazabicyclo[2.2.2]octane (DABCO), 1,8-diazabicyclo[5.4.0]undec-7-ene (DBU), 1,5-diazabicyclo[4.3.0]non-5-ene (DBN), 2,2'-dimorpholinodiethyl ether (DMDEE), N-alkylmorpholines, N,N'-dimethylpiperazine; aromatic nitrogen compounds such as 4-dimethylaminopyridine, N-methylimidazole, N-vinylimidazole or 1,2-dimethylimidazole; organic ammonium compounds such as benzyltrimethylammonium hydroxide or alkoxylated tertiary amines; called "delayed action" catalysts, which are modifications of known metal or amine catalysts; and combinations of the compounds mentioned, especially of metal compounds and tertiary amines.

In preferred embodiments, of the two-component composition according to the invention, said catalyst **C1** is an amine-based catalyst, preferably selected from the list 1,4-diazabicyclo[2.2.2]octane (DABCO), 1,8-diazabicyclo[5.4.0]undec-7-ene (DBU), 1,5-diazabicyclo[4.3.0]non-5-ene (DBN), 2,2'-dimorpholinodiethyl ether (DMDEE), and other catalytically active compounds containing tertiary amino groups. Most preferred is ,4-diazabicyclo[2.2.2]octane (DABCO).

The first component **A** of the two-component composition preferably comprises between 0.1 wt.-% and 5 wt.-%, in particular between 0.5 wt.-% and 4 wt.-%, most preferably between 1 wt.-% and 3 wt.-%, based on component **A**, of catalyst **C1**.

### Catalyst C2

The first component **A** of the two-component composition according to the invention comprises at least one catalyst **C2** for catalyzing the trimerization reaction of isocyanate groups, wherein said catalyst **C2** is a trialkylphosphine compound.

Suitable as catalyst **C2** are all trialkylphosphine compounds that show catalytic activity in the trimerization reaction of isocyanates.

It was found that only trialkylphosphates among all known trimerization catalysts exhibit the required properties for the purpose of the invention, especially the desired low exothermicity during trimerization curing.

Suitable as catalyst **C2** are in particular trialkylphosphine compounds with alkyl groups having 1 to 8 carbon atoms, in particular tributylphosphine and trioctylphosphine.

The most preferred catalyst **C2** is trioctylphosphine.
Trioctylphosphine has the molecular formula C₂₄H₅₁P and in particular is meant to be tri-n-octylphosphine or [CH₃(CH₂)₇]₃P, respectively.

When compared to other tertiary organic phosphine catalyst, such as e.g. tri-n-butyl-phosphine, trioctylphosphine is rather easy to handle and significantly less problematic with regard to environmental, health and safety properties (EHS). Especially, trioctylphosphine is much less problematic regarding bad odor generation.

However, further tertiary organic phosphine catalysts can be present, if desired.

In any case, it is preferred that no further catalysts other than trialkylphosphines are present in the composition.

Accordingly, in a very preferred embodiment of the two-component composition, the at least one trialkylphosphine catalyst consists of trioctylphosphine and no further trimerization catalyst or trimerization co-catalyst other than trioctylphosphine is added.

Trioctylphosphine typically has sufficient solubility in the polyisocyanate composition with these proportions. Thus, trioctylphosphine can be used in pure form. However, it is also possible and may be preferred to use trioctylphosphine of technical grade (≥ 90% purity). In general, it is preferred that trioctylphosphine is liquid under ambient conditions and/or when it is added to the composition. Optionally, trioctylphosphine can be added pre-mixed with other substances, for example plasticizers, polyols, diluents, or other additives.

Optionally, however, trioctylphosphine and/or any other catalyst can also be used dissolved in a suitable organic solvent to improve their compatibility. Suitable catalyst solvents are, for example, solvents that are inert toward isocyanate groups and do not alter the optical properties of the resulting composition, e.g., by exhibiting poor compatibility and/or by exhibiting a different density.

The first component **A** of the two-component composition preferably comprises between 0.1 wt.-% and 5 wt.-%, in particular between 0.5 wt.-% and 4 wt.-%, most preferably between 1 wt.-% and 3 wt.-%, based on component **A,** of catalyst **C2**.

### Foam stabilizer F

The first component **A** of the two-component composition according to the invention preferably comprises at least one foam stabilizer **F.**

Foam stabilizer **F** may optionally but preferably be used to improve the foam quality in embodiments of the two-component composition that are intended to foam and that contain blowing agents **E**. Foam stabilizers may help in the early stages of the foaming process to improve the foam quality and the formed foam cells, when curing of the composition has not yet progressed sufficiently to stabilize the formed foam by the cured polymer matrix alone.

Accordingly, it is preferred that a foam stabilizer **F** is contained in the two-component composition when also a blowing agent **E** is contained in the two-component composition.

Suitable as foam stabilizer **F** are all known foam stabilizers commonly used in polyurethane foams. Preferred foam stabilizers **F** are silicone-based foam stabilizers, for example silicone-polyether copolymers.

Examples of suitable and preferred foam stabilizers are those available under the trade name line Tegostab^{®} by Evonik, for example Tegostab^{®} B 8870, Tegostab^{®} B 8491, Tegostab^{®} B 8444, Tegostab^{®} B 8460, and Tegostab^{®} B 8523.

The first component **A** of the two-component composition preferably comprises between 0.5 wt.-% and 7.5 wt.-%, in particular between 1 wt.-% and 6 wt.-%, most preferably between 2.5 wt.-% and 5 wt.-%, based on component **A**, of foam stabilizer **F**.

The first component **A** of the two-component composition may comprise further optional additives, which are discussed further below.

### Second component B

The second component **B** of the two-component composition according to the invention comprises
- at least one oligomeric or polymeric polyisocyanate **I**;
- preferably at least one blowing agent **E**.

### Polyisocyanate I

The second component **B** of the two-component composition according to the invention comprises at least one oligomeric or polymeric polyisocyanate **I.**

"Oligomeric polyisocyanates" are meant to be polyisocyanates which have been obtained by reacting at least two monomeric polyisocyanates, especially via a dimerization and/or trimerization reaction of the isocyanate groups. Thereby uretdione, isocyanurate and/or biuret units can be formed for example. However, oligomeric polyisocyanates still have at least two free isocyante groups per molecule. Processes for preparing oligomeric polyisocyanates are known to those skilled in the art. Furthermore, oligomeric polyisocyanates are commercially available from different suppliers, e.g. in the form of hardener components for polyurethane coatings and adhesives. Suitable oligomeric polyisocyanates are commercially available, for example under the trade name range Desmodur^{®} N from Covestro, for example Desmodur^{®} N 3600 or Desmodur^{®} N 3300.

In preferred embodiments, the proportion of monomeric polyisocyanates, in particular diisocyanates, in the polyisocyanate I is at most 1 wt.%, especially at most 0.5 wt.%, preferably at most 0.3 wt.%, particularly at most 0.2 wt.%, more preferred at most 0.1 wt.%, most preferably less than 0.1 wt.%, based on the weight of component **B**.

In the same or other preferred embodiments, the overall content of monomeric polyisocyanates, in particular diisocyanates, in the two-component compositions is below 0.5 wt.-%, preferably below 0.4 wt.-%, more preferably below 0.3 wt.-%, in particular below 0.2 wt.-%, most preferably below 0.1 wt.-%, based on the total two-component composition.

Thus, the component **B** may comprise at least one monomeric polyisocyanate, in particular diisocyanate, but the proportion should preferably be kept at a low level. In practice, removal of unwanted excess monomers can be achieved by distillation or extraction, preferably by thin-film distillation under high vacuum or by extraction with suitable solvents that are inert toward isocyanate groups. Such processes are known to the person skilled in the art.

Preferably, the at least one oligomeric polyisocyanate comprised in polyisocyanate **I** has an uretdione, isocyanurate, allophanate, biuret, iminooxadiazinedione and/or oxadiazinetrione structure. Particularly preferred are biuret, allophanate, isocyanurate and/or iminooxadiazinedione structures. Especially preferred are isocyanurate structures.

According to a preferred embodiment, the at least one polyisocyanate I consists to an extent of at least 50 mol.%, preferably at least 60 mol.%, more preferably at least 70 mol.%, preferably at least 80 mol.% or 90 mol.%, based on the sum total of all uretdione, isocyanurate, allophanate, biuret, iminooxadiazinedione and oxadiazinetrione structures present in the polyisocyanate composition, of an isocyanurate structure.

Especially, the at least one oligomeric or polymeric polyisocyanate **I** comprises one or more oligomeric polyisocyanates which are based on oligomers of diisocyanates.

In particular, the at least one oligomeric or polymeric polyisocyanate I comprises at least 70 wt.%, in particular at least 80 wt.%, especially at least 85 wt.%, preferably at least 95 wt.%, particularly preferred at least 98 wt.%, for example at least 99 wt.%, based on the weight of the polyisocyanate **I,** having exclusively aliphatically and/or cycloaliphatically bonded isocyanate groups. Especially, the at least one oligomeric polyisocyanate has exclusively aliphatically and/or cycloaliphatically bonded isocyanate groups.

Especially these oligomers are based on butane-1,4-diisocyanate, pentane-1,5-diisocyanate, hexane-1,6-diisocyanate, 2,2,4 (or 2,4,4)-trimethylhexane-1,6-diisocyanate, isophorone diisocyanate, 4,4'- diisocyanatodicyclohexylmethane or mixtures thereof. Especially preferred are oligomers of 1,6-diisocyanatohexane.

In a highly preferred implementation, the at least one oligomeric polyisocyanate **I** comprises or consists of a trimer of 1,6-diisocyanatohexane, in particular hexamethylene triisocyanate triisocyanurate.

In another highly preferred implementation, the at least one oligomeric polyisocyanate **I** comprises or consists of a trimer of 1,5-diisocyanatopentane, in particular pentamethylene triisocyanate triisocyanurate.

In another highly preferred implementation, the at least one oligomeric polyisocyanate **I** comprises or consists of oligomers of diphenylmethane 4,4'-, 2,4'-, and/or 2,2'-diisocyanate.

According to another special implementation, the polyisocyanate composition comprises a mixture of at least two oligomeric polyisocyanates whereby the at least two oligomeric polyisocyanates differ in their chemical structure. In an especially preferred embodiment thereof, said oligomeric or polymeric polyisocyanate **I** comprises both an isocyanurate of hexamethylene 1,6-diisocyanate (HDI) and polymeric diphenylmethane 4,4'-, 2,4'-, and/or 2,2'-diisocyanate (PMDI).

Preparation processes for the oligomeric polyisocyanates having uretdione, isocyanurate, allophanate, biuret, iminooxadiazinedione and/or oxadiazinetrione structure in the polyisocyanate composition are described, for example, in J. Prakt. Chem. 336 (1994) 185 - 200, in DE 1 670 666, DE 1 954 093, DE 2 414 413, DE 2 452 532, DE 2 641 380, DE 3 700 209, DE 3 25 900 053 and DE 3 928 503 or in EP 0 336 205, EP 0 339 396 and EP 0 798 299.

Suitable oligomers, polymers, and derivatives suitable as oligomeric polyisocyanate I are especially those derived from diphenylmethane 4,4'-, 2,4'-, and/or 2,2'-diisocyanate (MDI), toluene-2,4-diisocyanate (TDI), hexamethylene 1,6-diisocyanate (HDI), and 5-isocyanato-1-(isocyanatomethyl)-1,3,3-trimethylcyclohexane or isophorone diisocyanate (IPDI). Preferred are those derived from MDI and HDI.

Particularly suitable commercially available examples of oligomeric polyisocyanates **I** are in particular HDI biurets such as Desmodur^{®} N 100 and N 3200 (from Covestro), Tolonate^{®} HDB and HDB-LV (from Vencorex), and Duranate^{®} 24A-100 (from Asahi Kasei); HDI isocyanurates such as Desmodur^{®} N 3300, N 3600, and N 3790 BA (all from Covestro), Tolonate^{®} HDT, HDT-LV, and HDT-LV2 (from Vencorex), Duranate^{®} TPA-100 and THA-100 (from Asahi Kasei), and Coronate^{®} HX (from Nippon Polyurethane); HDI uretdiones such as Desmodur^{®} N 3400 (from Covestro); HDI iminooxadiazinediones such as Desmodur^{®} XP 2410 (from Covestro); HDI allophanates such as Desmodur^{®} VP LS 2102 (from Covestro); IPDI isocyanurates, for example in solution as Desmodur^{®} Z 4470 (from Covestro) or in solid form as Vestanat^{®} T1890/ 100 (from Evonik); TDI oligomers such as Desmodur^{®} IL (from Covestro); and also mixed isocyanurates based on TDI/HDI, for example as Desmodur^{®} HL (from Covestro). Also particularly suitable are MDI forms that are liquid at room temperature (so-called "modified MDI"), which are mixtures of MDI with MDI derivatives such as, in particular, MDI carbodiimides or MDI uretonimines or MDI urethanes, known by trade names such as Desmodur^{®} CD, Desmodur^{®} PF, Desmodur^{®} PC (all from Covestro) or Isonate^{®} M 143 (from Dow), and mixtures of MDI and MDI homologs (polymeric MDI or PMDI), available under trade names such as Desmodur^{®} VL, Desmodur^{®} VL50, Desmodur^{®} VL R10, Desmodur^{®} VL R20, Desmodur^{®} VH 20 N, and Desmodur^{®} VKS 20F (all from Covestro), Isonate^{®} M 309, Voranate^{®} M 229 and Voranate^{®} M 580 (all from Dow) or Lupranat^{®} M 10 R (from BASF). The abovementioned oligomeric polyisocyanates are in practice typically mixtures of substances having different degrees of oligomerization and/or chemical structures. They preferably have an average NCO functionality of 2.1 to 4.0.

In very preferred embodiments of the two-component composition, said oligomeric or polymeric polyisocyanate **I** comprises both an isocyanurate of hexamethylene 1,6-diisocyanate (HDI) and polymeric diphenylmethane 4,4'-, 2,4'-, and/or 2,2'-diisocyanate (PMDI).

In the same or other preferred embodiments of the two-component composition, said oligomeric or polymeric polyisocyanate **I** comprises or consists of a polyurethane polymer containing isocyanate groups.

This isocyanate-functional polymer is preferably prepared beforehand, by combining the at least one monomeric diisocyanate and the at least one polyol in a molar NCO/OH ratio of at least 1.1, in particular at least 1.3, preferably at least 1.5, more preferably at least 1.8, in the absence of moisture at a temperature in the range of 20 to 160 °C, preferably 40 to 140 °C, optionally in the presence of a suitable catalyst. This synthesis is well known in the field.

Suitable as polyols for this purpose are all polyols described further above as polyol **P,** and preferred embodiments of these polyols correspond to the preferred embodiments of polyol **P**.

Suitable as monomeric diisocyanates for this purpose are all monomeric diisocyanates, in particular diphenylmethane 4,4'-, 2,4'-, and/or 2,2'-diisocyanate (MDI), toluene-2,4-diisocyanate (TDI), hexamethylene 1,6-diisocyanate (HDI), and 5-isocyanato-1-(isocyanatomethyl)-1,3,3-trimethylcyclohexane or isophorone diisocyanate (IPDI). Preferred are MDI and IPDI.

A particularly preferred isocyanate-functional polymer comprised in polyisocyanate **I** has a content of monomeric diisocyanate, in relation to the total polymer, of below 0.5 weight-%, preferably below 0.3 weight-%, more preferably below 0.2 weight-%, most preferably below 0.1 weight-%. Such a low monomer isocyanate-functional polymer allows curable compositions which have a content of monomeric diisocyanates of below 0.1 weight-% and are safe to use without special protective measures and do not require hazard labelling.

For such a polymer, the reaction is preferably conducted at a molar NCO/OH ratio of at least 3/1, preferably 3/1 to 10/1, particularly 3/1 to 8/1, followed by the removal of most of the remaining monomeric diisocyanate by a distillation process, preferably by thin film distillation or short path distillation under vacuum.

Another possibility to obtain an isocyanate-functional polymer with a low content of monomeric diisocyanate is by chemically reducing the content of monomeric diisocyanates, for example by adding small amounts of water, preferably in combination with a surfactant.

The second component **B** of the two-component composition preferably comprises between 50 wt.-% and 100 wt.-%, in particular between 75 wt.-% and 95 wt.-%, most preferably between 85 wt.-% and 90 wt.-%, based on component **B,** of oligomeric or polymeric polyisocyanate **I**.

### Blowing agent E

The second component **B** of the two-component composition according to the invention preferably comprises at least one blowing agent **E**.

A "blowing agent" is an additive that, when activated, causes a volumetric expansion in the two-component composition and ultimately leads to the formation of a foam material. The foam created may be an open cell foam or a closed cell foam. Initial stabilization of the thus created foam may be supported by foam stabilizers **F,** but eventually the created foam and its cellular structure are stabilized by the crosslinked or cured two-component composition.

A suitable blowing agent may be a chemical or physical blowing agent. Chemical blowing agents are organic or inorganic compounds that decompose under influence of, e.g., temperature or humidity, while at least one of the formed decomposition products is a gas. Physical blowing agents include, but are not limited to, compounds that become gaseous at a certain temperature or exhibit a significant increase in their vapor pressure upon moderate heating. Thus, both chemical and physical blowing agents are suitable to cause an expansion in the thermally expandable composition, as long as their activation, either thermal or otherwise, is possible within the application conditions of the two-component composition according to the invention.

Suitable chemical blowing agents **E** include, for example, azo compounds, hydrazides, nitroso compounds, carbamates, and carbazides.

Also suitable as blowing agents **E** are dual chemical systems, such as acid/base systems that generate gases upon reaction. One example is sodium hydrogen carbonate and citric acid, a system that generates carbon dioxide when combined in a suitable medium.

Furthermore, it is possible in certain embodiments of the two-component composition that contain large amounts of highly reactive polyisocyanates such as those based on MDI to achieve foaming by adding water to component **A.** After mixing of the two components **A** and **B** water will react with parts of the isocyanate groups to form gaseous CO₂.

Suitable physical blowing agents include for example low-boiling point hydrocarbons or halogenated hydrocarbons and expandable microspheres consisting of a thermoplastic shell filled with thermally expandable fluids or gases. An example for such suitable microspheres are Expancel^{®} microspheres (by AkzoNobel).

In preferred embodiments, said blowing agent **E** is liquid at 23°C.

Most preferred as blowing agent **E** are low-boiling point hydrocarbons or halogenated hydrocarbons, in particular liquid such compounds. A preferred and highly suitable example of such a preferred blowing agent **E** is Solstice^{®} LBA (from Honeywell), which is liquid *trans*-1-chloro-3,3,3-trifluoropropene.

The heat that may be required for the decomposition reaction that causes the foaming (expansion) of certain chemical blowing agents or the heat required for the vaporization and volumetric expansion of physical blowing agents can be applied externally or internally, the latter e.g., from the exothermicity of the curing reaction. In preferred embodiments of the two-component composition, the limited exothermic heat generated by the curing material is sufficient for the blowing agent **E** to cause foaming of the composition. Such foaming should preferably occur in any case at temperatures below 100°C, in particular below 80°C, preferably below 60°C.

The second component **B** of the two-component composition preferably comprises between 1 wt.-% and 10 wt.-%, in particular between 2.5 wt.-% and 8 wt.-%, most preferably between 5 wt.-% and 7.5 wt.-%, based on component **B**, of blowing agent **E**.

### Optional additives

As optional constituents of the first component **A,** the two-component composition may comprise further substances that are reactive with isocyanates, especially
- di- or polyfunctional alcohols, especially those having an average molecular weight Mₙ in the range from 250 to 500 g/mol, especially ethoxylated and/or propoxylated bisphenol A, bisphenol F, trimethylolpropane or glycerol,
- chain extenders, especially diols having a molecular weight Mₙ in the range from 62 to 150 g/mol, especially ethylene glycol, propane-1,3-diol, butane-1,4-diol or pentane-1,5-diol,
- small amounts of primary polyamines, especially in order to directly obtain a structurally viscous, firm material that flows away to a lesser degree with the mixing of the two components,
- amino alcohols, or
- latent hardeners such as, in particular, ketimines, aldimines or oxazolidines.

The two-component composition may additionally comprise further constituents in either one or both of components **A** and **B,** especially the following auxiliaries and admixtures:
- fillers, especially ground or precipitated calcium carbonates, optionally coated with fatty acids, especially stearates, barytes, quartz flours, quartz sands, dolomites, wollastonites, kaolins, calcined kaolins, sheet silicates, such as mica or talc, zeolites, aluminum hydroxides, magnesium hydroxides, silicas, including finely divided silicas from pyrolysis processes, industrially produced carbon blacks, graphite, metal powders, for example of aluminum, copper, iron, silver or steel, PVC powders or hollow beads;
- fibers, especially glass fibers, carbon fibers, metal fibers, ceramic fibers, polymer fibers, such as polyamide fibers or polyethylene fibers, or natural fibers, such as wool, cellulose, hemp or sisal;
- nanofillers such as graphene or carbon nanotubes;
- dyes;
- pigments, especially titanium dioxide, chromium oxide, iron oxides or organic pigments;
- plasticizers, especially phthalates, terephthalates, trimellitates, adipates, sebacates, azelates, succinates, citrates, benzoates, diesters of ortho-cyclohexanedicarboxylic acid, acetylated glycerol, monoglycerides, fatty acid methyl or ethyl esters, also called "biodiesel", natural or modified vegetable oils, organic phosphoric or sulfonic esters, sulfonamides, urethanes, high-boiling hydrocarbons, polybutenes, polyisobutylenes, polystyrenes or chloroparaffins;
- solvents, especially those as customarily used in paints, varnishes or coatings;
- modifiers such as hydrocarbon resins, natural or synthetic waxes or bitumen;
- rheology modifiers, especially urea compounds, sheet silicates such as bentonites, derivatives of castor oil, hydrogenated castor oil, polyamides, polyurethanes, fumed silicas or hydrophobically modified polyoxyethylenes;
- desiccants, especially molecular sieves, calcium oxide, monooxazolidines such as Incozol^{®} 2 (from Incorez) or orthoformic esters;
- adhesion promoters, especially titanates or organoalkoxysilanes such as aminosilanes, mercaptosilanes, epoxysilanes, vinylsilanes, (meth)acrylosilanes, carbamatosilanes, alkylsilanes, S-(alkylcarbonyl)mercaptosilanes, aldiminosilanes or oligomeric forms of these silanes;
- non-reactive thermoplastic polymers, for example homo- or copolymers of unsaturated monomers, especially from the group comprising ethylene, propylene, butylene, isobutylene, isoprene, vinyl acetate and alkyl (meth)acrylates, especially polyethylenes (PE), polypropylenes (PP), polyisobutylenes, ethylene-vinyl acetate copolymers (EVA) and atactic poly-α-olefins (APAO);
- flame-retardant substances, especially the aluminum hydroxide or magnesium hydroxide fillers already mentioned, and also especially organic phosphoric acid esters such as, in particular, triethyl phosphate, tricresyl phosphate, triphenyl phosphate, diphenyl cresyl phosphate, isodecyl diphenyl phosphate, tris(1,3-dichloro-2-propyl) phosphate, tris(2-chloroethyl) phosphate, tris(2-ethylhexyl) phosphate, tris(chloroisopropyl) phosphate, tris(chloropropyl) phosphate, isopropylated triphenyl phosphate, mono-, bis- or tris(isopropylphenyl) phosphates of different degrees of isopropylation, resorcinol bis(diphenylphosphate), bisphenol A bis(diphenylphosphate), ammonium polyphosphates, melamine or derivatives thereof, boron compounds or antimony compounds;
- further additives, especially wetting agents, leveling agents, defoamers, deaerators, stabilizers against oxidation, heat, light or UV radiation, or biocides; and other substances customarily used in curable compositions.

Such additives may present as constituents of the first component **A** or of the second component **B**. Substances reactive with isocyanate groups are preferably a constituent of the first component **A**. It may be advisable to subject certain constituents to chemical or physical drying before mixing them into the respective component.

The mixing ratio of the first component **A** and the second component **B** of the two-component composition depends on the formulation of the individual components and may be tailored to the requirements of the application process.

When formulating the two-component composition, it should be ensured that the amounts of polyol **A** and polyisocyanate **I** and/or the mixing ratio of components **A** and **B** are adjusted such that the molar ratio of all NCO groups in the two-component composition to all OH groups in the two-component composition is higher than 1.1, in particular higher than 1.2, preferably higher than 1.3.

The reason for this excess of NCO groups compared to OH groups is the two-step curing mechanism described further below. The excess of NCO groups allows for the trimerization reaction of NCO groups to proceed after most or all OH groups from the polyol have depleted due to the faster urethane-forming reaction.

In preferred embodiments of the two-component composition, the mixing ratio in parts by weight between the first component **A** and the second component **B** is in the range from 5:1 to 1:5, especially 1:1 to 1:3.

In the same or other preferred embodiments of the two-component composition, the mixing ratio in parts per volume between the first component **A** and the second component **B** is in the range from 5:1 to 1:5, especially 1:1 to 1:3.

A second aspect the present invention is directed to the use of a two-component composition as described before, including all embodiments and preferences, as potting material, particularly for the manufacturing of battery packs, in particular battery packs for electric vehicles.

The two-component composition described before, including all preferred embodiments for all possible components **A** and **B,** is advantageously used as potting material, in particular potting foam material.

In preferred embodiments of this use, said two-component composition as described before, including all embodiments and preferences, is used as potting material, in particular potting foam material, for the manufacturing of battery packs, in particular battery packs for electric vehicles.

The two-component composition described before has ideal properties that exceed those of the state of the art for use as potting material, in particular potting foam material, for the manufacturing of battery packs, in particular battery packs for electric vehicles. Apart from the curing properties and low exothermicity, it also shows excellent mechanical properties in the cured state, and it exhibits a better EHS profile than most commonly used 2C-PU potting materials.

A third aspect the present invention is directed to a method for producing a battery pack, by using a two-component composition as described before, including all embodiments and preferences, as potting material.

This method for producing a battery pack, comprises the steps of:
a) mixing the first component **A** and second component **B** of a two-component composition as described before, including all embodiments and preferences,
b) pouring or injecting the mixed composition into a battery pack assembly comprising a multitude of battery cell, such that any cavity or gap between the cells is at least partially filled by the composition,
c) curing the composition, wherein a first curing step c1 between polyols and polyisocyanates occurs spontaneously within minutes to hours and a second curing step c2 involving isocyanate trimerization occurs spontaneously within hours to days or longer.

The curing step c1 occurs at room temperature, catalyzed by catalyst **C1**. The second curing step c2, catalyzed by catalyst **C2,** takes longer and is accelerated by heat.

During or after curing step c1, the battery cells embedded in the mixed and partially cured two-component composition may still be moved or replaced, as the partially cured two-component composition has not yet developed the full rigidity and mechanical strength, which is obtained after the second curing step c2. Accordingly, in a preferred embodiment of this method, at least one of the battery cells is moved or replaced during or after the first curing step c1.

Curing step c2 may take days or weeks to complete, which is however not a problem. After curing step c1 the material already has sufficient stability and strength that the battery pack can be moved or even incorporated into, e.g., a electric vehicle. The heat generated during charging cycles of the battery, which may reach for example 60°C during fast charging cycles, will support and accelerate curing step c2 and thus the final curing of the material. However, it is also possible to accelerate curing step c2 by placing the battery pack under slight heating conditions for a short time, which however should not exceed approximately 60° to 80°C.

In preferred embodiments of the method described above, the two-component composition contains a blowing agent **E** and preferably a foam stabilizer **F**, and the curing of the mixed two-component composition is preceded or accompanied by a volumetric expansion of the composition caused by the blowing agent **E**, which produces a foam with closed or open cell structure.

A foamed material offers additional advantages, such as weight reduction, thermal insulation, and shock-absorbing properties.

A fourth aspect of the present invention is directed to a battery pack produced by the method according to the present invention just described above.

Further advantageous implementations of the invention are evident from the exemplary embodiments.

### Exemplary embodiments

### Materials

For the experiments, the substances listed in Table 1 were used.

**Table 1**

| Substance | **Product/Supplier** |
|---|---|
| Polyether triol (polyol **P**) | Voranol^{®} CP 300 Polyol (Dow); glycerine propoxylated polyether triol with an average molecular weight of 300 g/mol |
| Foam stabilizer (foam stabilizer **F**) | Tegostab^{®} B 8870 (Evonik); non-hydrolysable polysiloxane-polyether-copolymer |
| Catalyst C1 (catalyst **C1**) | DABCO^{®} 33-LV Catalyst (Evonik); mixture of 33 % triethylene diamine (1,4-Diazabicyclo[2.2.2]octan) and 67 % dipropylene glycol |
| Catalyst C2 (catalyst **C2**) | Trioctylphosphine (97%, Sigma Aldrich) |
| HDI isocyanurate (oligomeric polyisocyanate **I**) | Desmodur^{®} N 3600 (Covestro); Hexamethylene diisocyanate triisocyanurate |
| Oligomeric MDI (oligomeric polyisocyanate **I**) | Distilled Desmodur^{®} 44V 10L (Covestro), based on diphenylmethane-4,4'-diisocyanate (4,4'-MDI) with a residual amount of monomeric MDI of about 0.3% |
| Liquid blowing agent (blowing agent **E**) | Solstice^{®} LBA (Honeywell); Liquid *trans-*1-chloro-3,3,3-trifluoropropene |

### Preparation of samples

The respective components **A** and **B** of the exemplary two-component compositions V-1 and V-2 were prepared individually by adding the respective ingredients shown in Table 2 to a beaker of a speed mixer (SM) at room temperature. Then each component composition was flushed with N₂ in the beaker and closed. Subsequently the mixture was homogenized with the speed mixer operating at 2'500 rpm for 60 seconds.

**Table 2**

| **Example** | **V-1** | **V-2** |
|---|---|---|
| First component **A** (amounts in parts by weight) | | |
| Polyether triol (polyol **P**) | 90.1 | 94.4 |
| Foam stabilizer (foam stabilizer **F**) | 4.5 | - |
| Catalyst C1 (catalyst **C1)** | 2.7 | 2.8 |
| Catalyst C2 (catalyst **C2**) | 2.7 | 2.8 |
| *TOTAL* | *100* | *100* |

| Second component **B** (amounts in parts by weight) | | |
|---|---|---|
| HDI isocyanurate (oligomeric polyisocyanate **I**) | 62.5 | 66.7 |
| Oligomeric MDI (oligomeric polyisocyanate **I**) | 31.25 | 33.3 |
| Liquid blowing agent (blowing agent **E**) | 6.25 | - |
| *TOTAL* | *100* | *100* |

The total content of monomeric diisocyanates in component **B** of examples V-1 and V-2 was 0.2% by weight, based on component **B**.

For curing and testing of the two-component compositions V-1 and V-2, both components **A** and **B** were mixed in a volume ratio **A : B** of 1 : 2, which corresponds to a weight ratio **A** : **B** of 1 : 2.1715.

After mixing at room temperature, curing started spontaneously, and examples V-1 and V-2 had an open time (during which the material can be used to fill cavities) of 1 minute. Foaming of the material V-1 started after 2 minutes after mixing of the components **A** and **B**.

### Mechanical and thermal properties

**Tensile strength**, **elongation at break** and the **Young's modulus** (at 0.05-0.25% elongation) were determined on sample V-2 according to DIN EN ISO 527 (tensile test speed: 2 mm / min) with cured films having a thickness of 2 mm (Dogbone sample type 5A, DIN EN ISO 527-2).

**Compression modulus** was measured according to ASTM D1621 (Compressive Properties of Rigid Cellular Plastics) on fully cured and expanded sample V-1.

**Electrical resistivity** was measured according to DIN EN 62631-3-1 on fully cured and expanded sample V-1.

**Dynamic mechanical analysis** (DMA) measurements were conducted with an Anton Paar MCR 702e. The glass transition temperatures (Tg) were determined from the phase angle tan δ which corresponds to the ratio of the loss modulus to the storage modulus. The samples were heated from 20° C to 150° C. at a heating rate of 5° C min⁻¹. The frequency was kept constant at 1 Hz and the shear deformation was between 0.01 and 0.5%. Tg values were determined on sample V-2 after curing at room temperature for 24h and a second time after additional postcuring for 1 hour at 80°C, which accelerated the trimerization curing step.

**Expansion** of cured and expanded sample V-1 was measured by first determining the density of cured samples V-1 and V-2 using a pycnometer and calculating the expansion percentage of sample V-1 based on the difference of density between non-expanded sample V-2 and expanded sample V-1.

The results of these measurements are shown in Table 3.

**Table 3**

| **Measurement** | **V-1** | **V-2** |
|---|---|---|
| Tensile strength [MPa] | n/m | 48.2 |
| Young's modulus (at 0.05-0.25% elongation) [MPa] | n/m | 2020 |
| Tg (°C) after curing at room temperature for 24h | 90 | n/m |
| Tg (°C) after postcuring at 60°C for 1h | 120 | n/m |
| Compression modulus [MPa] | 95 | n/m |
| Electrical resistivity [Ω · cm] | 2.53·10¹⁷ | n/m |
| Expansion [%] | 200 | n/m |

| | | |
|---|---|---|
| "n/m" means that this value was not measured. | | |

The data presented in Table 3 shows that the compositions according to the invention exhibit very good mechanical properties and Tg values outside the working temperature of electric vehicle batteries. Furthermore, the expanded embodiment shows high volumetric expansion and a very good compression modulus. Most striking is the excellent electrical resistivity of the expanded sample V-1, which exceeds common 2C-PU compositions used in battery assembly.

It will be appreciated by those skilled in the art that the present invention can be implemented in other specific forms without departing from the spirit or essential characteristics thereof. The presently disclosed implementations and embodiments are therefore considered in all respects to be illustrative and not restricted.

## Claims

1. A two-component composition consisting of a first component **A** and a second component **B**; wherein
- the first component **A** comprises
- at least one polyol **P** having an average OH functionality of at least 2;
- at least one catalyst **C1** for catalyzing the reaction between hydroxyl groups and isocyanate groups;
- at least one catalyst **C2** for catalyzing the trimerization reaction of isocyanate groups;
- preferably at least one foam stabilizer **F**; and
- the second component **B** comprises
- at least one oligomeric or polymeric polyisocyanate **I**;
- preferably at least one blowing agent **E**;
wherein said catalyst **C2** is a trialkylphosphine compound;
and wherein the molar ratio of all NCO groups in the two-component composition to all OH groups in the two-component composition is higher than 1.1, preferably higher than 1.3.

2. The two-component composition as claimed in claim 1, **characterized in that** said catalyst **C1** is an amine-based catalyst, preferably selected from the list 1,4-diazabicyclo[2.2.2]octane (DABCO), 1,8-diazabicyclo[5.4.0]undec-7-ene (DBU), 1,5-diazabicyclo[4.3.0]non-5-ene (DBN), 2,2'-dimorpholinodiethyl ether (DMDEE), and other catalytically active compounds containing tertiary amino groups.

3. The two-component composition as claimed in either of claims 1 and 2, **characterized in that** said polyol **P** comprises at least one triol, in particular a polyether triol, or a mixture of at least one triol and at least one diol, in particular a polyether triol and a polyether diol.

4. The two-component composition as claimed in any of the preceding claims, **characterized in that** said catalyst **C2** is trioctylphosphine.

5. The two-component composition as claimed in claim 4, **characterized in that** said oligomeric or polymeric polyisocyanate **I** comprises both an isocyanurate of hexamethylene 1,6-diisocyanate (HDI) and polymeric diphenylmethane 4,4'-, 2,4'-, and/or 2,2'-diisocyanate (PMDI).

6. The two-component composition as claimed in any of the preceding claims, **characterized in that** said blowing agent **E** is liquid at 23°C.

7. The two-component composition as claimed in any of the preceding claims, **characterized in that** said oligomeric or polymeric polyisocyanate I comprises a polyurethane polymer containing isocyanate groups.

8. The two-component composition as claimed in any of the preceding claims, **characterized in that** the overall content of monomeric diisocyanates is below 0.5 wt.-%, in particular below 0.1 wt.-%, based on the total two-component composition.

9. The two-component composition as claimed in any of the preceding claims, **characterized in that** the mixing ratio in parts by weight between the first component **A** and the second component **B** is in the range from 5:1 to 1:5, especially 1:1 to 1:3.

10. Use of a two-component composition according to any of the preceding claims as potting material.

11. Use as claimed in claim 10, **characterized in that** said potting material is used for the manufacturing of battery packs, in particular battery packs for electric vehicles.

12. A method for producing a battery pack, comprising the steps of:
a) mixing the first component **A** and second component **B** of a two-component composition as claimed in any of claims 1 to 9,
b) pouring or injecting the mixed composition into a battery pack assembly comprising a multitude of battery cell, such that any cavity or gap between the cells is at least partially filled by the composition,
c) curing the composition, wherein a first curing step c1 between polyols and polyisocyanates occurs spontaneously within minutes to hours and a second curing step c2 involving isocyanate trimerization occurs spontaneously within hours to days or longer.

13. The method as claimed in claim 12, **characterized in that** the two-component composition contains a blowing agent **E** and preferably a foam stabilizer **F,** and wherein the curing of the mixed two-component composition is preceded or accompanied by a volumetric expansion of the composition caused by the blowing agent **E,** which produces a foam with closed or open cell structure.

14. The method as claimed in claim 12 or 13, **characterized in that** at least one of the battery cells is moved or replaced during or after the first curing step c1.

15. A battery pack produced by the method of any of claims 12 to 14.
